# EUROPEAN PATENT SPECIFICATION

(11) **EP 3 923 732 B1**
(45) Date of publication and mention of the grant of the patent: **10.07.2024**
(21) Application number: 20703481.0
(22) Date of filing: 12.02.2020
(51) Int. Cl.: B26D 1/16, B26D 5/32, A22C 17/00

(54) **CONTROLLING ANGULAR SPEED OF ECCENTRIC MOVEMENT OF CIRCULAR BLADE**
STEUERUNG DER WINKELGESCHWINDIGKEIT DER EXZENTERBEWEGUNG EINES KREISSÄGEBLATTS
RÉGLAGE DE LA VITESSE ANGULAIRE DU MOUVEMENT EXCENTRIQUE D'UNE LAME CIRCULAIRE

(30) Priority: 12.02.2019 EP 19156710
(43) Date of publication of application: 22.12.2021
(73) Proprietor: Marel A/S, 8200 Arhus N (DK)
(72) Inventor: GRØNKJÆR, Rune, 6760 Ribe (DK); TJØRNELUND, Michael, 8920 Randers NV (DK); KRABBE, Daniel, 8210 Århus V (DK)
(74) Representative: Inspicos P/S
(86) International application number: PCT/EP2020/053570
(87) International publication number: WO 2020/165234

(56) References cited:
- EP-A1- 0 127 462
- US-A1- 2011 154 969
- US-A1- 2017 212 506

## Description

### FIELD OF THE INVENTION

The invention relates to a cutting apparatus for cutting a food object and more particularly a cutting apparatus comprising a circular blade being rotatable around a first axis through a centre of the circular blade and wherein the circular blade is also rotatable around a second axis, wherein the second axis is parallel and non-coaxial with respect to the first axis. The invention also relates to a corresponding use and method.

### BACKGROUND OF THE INVENTION

In food processing plants cutting cuts of livestock, such primal cuts of cattle or pigs, into sub-cuts is a process, which is advantageously to be carried out at high capacity, yet at the same time must be carried out with high quality, such as leaving behind sub-cuts of well-determined sizes (such as dimensions and/or mass) and with cleanly cut interfaces. The parameters of high capacity and high quality, however, involve a trade-off.

Hence, an improved system, use and method for cutting a food object would be advantageous, and in particular a system, use and method, which mitigates or overcomes the trade-off, such as enabling simultaneously high capacity and quality.

US 2017/212506 A1 describes that a method and system are provided for automatically portioning workpieces using a rotating blade passing through narrow gap formed between the ends of adjacent conveyors.

### SUMMARY OF THE INVENTION

It may be seen as an object of the present invention to provide a system, use and method, which overcomes the problems mentioned above. Thus, the above described object and several other objects are intended to be obtained in a first aspect of the invention by providing a cutting apparatus according to claim 1.

The system is mainly described with one circular blade, but may be equipped with two, three, four or more blades, which are cutting in the same cutting plane and which are all located around the second axis in similar way as described in respect of the first circular blade.

The invention may be seen as particularly, but not exclusively, advantageous for obtaining a cutting apparatus enabling high capacity, yet at the same time enabling high quality, such as enabling leaving behind sub-cuts of well-determined sizes (such as dimensions and/or mass) and with cleanly cut interfaces. More particularly, by having a measurement apparatus for determining a position of at least a part of the surface of the object to be cut and a processor arranged for controlling an angular speed of the circular blade around the second axis based on the position of at least a part of the surface of the food object to be cut, it is possible to adjust the angular speed to be appropriate at any given angle. For example, a relatively high angular speed (relative to the relatively low angular speed mentioned below) can be applied at angles, such as an angular interval, where the circular blade is not in contact with any food object. This may ensure a high capacity because the circular blade is spending a minimum of time in traversing an angular distance between finishing cutting one food object to initiating cutting of a subsequent food object (such as the same food object at another position of the food object). Furthermore, a relatively low angular speed (relative to the relatively high angular speed mentioned below) can be applied when cutting of a food object is initiated (such as when cutting is initiated and throughout the cutting of the food object), where the angular position for applying said relatively low angular speed is obtained by the measurement device. This may ensure a high quality, in particular by enabling leaving behind a cleanly cut interface. Furthermore, knowledge about the position of the surface may be applied for estimating a mass and/or size of the sub-cut, which may in turn enable obtaining more well-determined sizes.

The cutting apparatus may be arranged for carrying out 60 or more, such as 100 or more, such as 120 or more, such as 180 or more, such as 200 or more, cuts per minute.

The 'height profile' of a food object is understood to be determined at least at a position/line/plane where the food object is to be cut. The 'height profile' is understood to be a profile as observed when looking along an axis being orthogonal to a cutting plane defined by the first circular blade The 'height profile' is understood to be quantitative, such as not merely the shape is determined but also the absolute values (such as corresponding values of heights and positions). Height is understood to be distance to a line or plane, such as a horizontal line or plane e.g. to the surface of a conveyor belt whereupon a food object to cut is located. In embodiments a surface of the food object, such as the entire food object, is determined (e.g., by determining a plurality of separated height profiles), which may be utilized for determining where to cut, e.g., based on predictions of the sizes of the resulting sub-cuts.

The 'food object' may be fish or meat, such as meat, such as meat from cattle or pig, such as a primal cut from cattle or pig. The 'food object' may be a fresh food object, such as non-frozen and/or non-undercooled. The food object may also be frozen and/or undercooled. The food object may have a mass of at least 100 gram, such as at least 1000 gram and/or a mass of less than 10 kg, such as less than 5 kg. The food object may have a mass within 0.1-10 kg, such as within 1-5 kg.

The circular blade rotates around its own axis (first axis) and rotates around another axis (second axis), such as in addition to rotation around its own axis (such as at at least 50 revolutions per minute (rpm), such as at least 100 rpm, such as at least 250 rpm, such as at least 500 rpm) it rotates (such as makes a planetary rotation) around another axis. The first axis and the second axis are substantially parallel, such as an angle between them being within 0°-10°, such as within 0°-2°, such as within 0°-1°, such as 0°, such as parallel. The cutting apparatus may comprise one or more actuators or motors, such a one or more electric motors, for rotating the circular blade around first axis and the second axis, such as an electric motor for rotating the circular blade around the first axis and an electric motor for rotating the blade around the second axis. The first axis and the second axis are non-coaxial, such as at least at a plane orthogonal to the first axis and comprising the circular blade, a distance between the first axis and the second axis is at least 1 cm, such as at least 2 cm, such as at least 5 cm, such as at least 10 cm, such as at least 20 cm, such as at least 35 cm, such as at least 50 cm. Alternatively, said distance is at least a distance equal to a radius of the circular blade. A distance between the first axis and the second axis is at most 100 cm, such as at most 50 cm, such as at most 35 cm, such as at most 20 cm, such as at most 10 cm. A distance between the first axis and the second axis is within 1-100 cm, such as within 10-50 cm.

In embodiments, there may be multiple circular blades, such as a first circular blade and a second circular blade, such as *N* circular blades, where *N* may be 2, 3, 4, 5, 6, 8, 10, 16, such as wherein an angle between the multiple blades next to each other is 360°/*N*. An advantage of multiple blades may be that a capacity is increased since each blade needs to travel less angular distance between a point in time where a preceding cutting (by another blade) ended and until cutting is initiated. In case of multiple circular blades, the multiple circular blades may be controlled together, e.g., mounted on a common member for rotation around the second axis, or individually, e.g., be operated with possibly different values of angular speed around the second axis.

An advantage of a circular blade may be that a circular blade enables better cutting (such as leaving behind cleaner cutting interfaces) than, e.g., a sword blade. In embodiments, rotation speeds about the first axis and second axis can be controlled individually. A possible advantage of such individual control of rotation speeds is that the cutting action can be fine-tuned for specific applications. The circular blade may be running around the first axis at a constant speed, and the angular speed when turning the circular blade around the second axis may differ according to the location of a food object to cut. In an embodiment the direction of the circular blade running around the first axis is opposite of the direction where the circular blade is moving around the second axis.

By 'measurement device' may be understood any device capable of determining a position of at least a part of the surface of the food object to be cut. For example, the measurement device could be a device for touching, such as being displaced by, the food object, which can thus determine a position of one point of the surface. Alternatively, the measurement device is a device for obtaining a height profile, such as an optical device, such as a laser scanner where the presence of a food object distorts a light line emitted by a laser, which distorted line is seen by a camera, whereupon image processing can yield a height profile of the food object. The position of at least a part of the surface of the food object to be cut may enable determining one or more or all of a first angular position at which the circular blade makes contact with the food object, a second angular position at which the circular blade finishes cutting the food object and a third angular position at which the circular blade looses contact with the food object (upon rotation of the circular blade around the second axis). In other words, the first angular position, the second angular position, the third angular position and/or the fourth angular position (as described elsewhere) may each be dependent on the position of at least a part of the surface of the food object at the position where the food object is to be cut. In particular, the first angular position may be dependent on the position of at least a part of the surface of the food object at the position where the food object is to be cut. Since the food object is not necessarily cylindrical, i.e., the position of the surface at the position to be cut may vary from cut to cut, each of the first, second, third and/or fourth angular position (such as the quantitative angular value) may vary from cut to cut. An advantage of a height profiler (such as a device for obtaining multiple corresponding values of height and lateral position) may be that it may enable determining the first, second and/or third angular position even for irregularly shaped food items. Another advantage of such height profiler may be that it enables more precisely estimating a size of a sub-cut, such as enables providing information on where to cut a food object in order to achieve a certain size of the sub-cut. The 'measurement device' may be arranged for sending or outputting the position of at least a part of the surface of the food object to be cut in, such as in analogue or digital form.The processor may be arranged for receiving the position of at least a part of the surface of the food object to be cut. The processor may furthermore be arranged for determining, such as calculating, the first, second and/or third angular position based on the position of at least a part of the surface of the food object to be cut. The processor is arranged for controlling an angular speed of the circular blade around the second axis, e.g., via a digital-to-analogue converter (DAC) coupled to an electric motor rotating the circular blade around the second axis.

According to an embodiment, there is presented a cutting apparatus wherein the processor is arranged for determining based on the position of at least a part of the surface of the food object to be cut, such as the height profile, a first angular position at which the circular blade makes contact with the food object upon rotation of the circular blade around the second axis. A possible advantage is that determination of the first angular value enables controlling the angular speed around the second axis so that it is not too high (such as not exceeding a threshold value, such as a first threshold value) when the circular blade starts cutting the food object. A too high angular speed at this point risks or entails that the sub-cuts do not end up with cleanly cut interfaces and/or that the sub-cuts are not aligned (such as the matter of the sub-cuts having substantially similar, such as similar or identical, relative spatial arrangement as before cutting). Another possible advantage is that determination of the first angular value enables controlling the angular speed around the second axis so that it is not too low when the circular blade is before and/or after the angular position where the circular blade starts cutting the food object. A too low angular speed at before and/or after this angular position risks or entails that the capacity of the cutting apparatus is less than optimal. The 'first angular position' is used interchangeably with 'an angular position at which the circular blade makes contact with the food object upon rotation of the circular blade around the second axis'.

According to an embodiment, there is presented a cutting apparatus wherein the processor is arranged for determining based on the position of at least a part of the surface of the food object to be cut, such as the height profile, a second angular position at which the circular blade finishes cutting the food object upon rotation of the circular blade around the second axis. One or more possible advantages are similar to those mentioned above for the first angular value (except that 'first angular value' is replaced by 'second angular value'). The 'second angular position' is used interchangeably with 'an angular position at which the circular blade finishes cutting the food object upon rotation of the circular blade around the second axis'.

According to an embodiment, there is presented a cutting apparatus wherein the processor is arranged for determining based on the position of at least a part of the surface of the food object to be cut, such as the height profile, a third angular position at which the circular blade looses contact, such as wherein there is no longer any overlap between the circular blade and the cross-section of the food object in a cutting plane defined by the circular blade as observed along an axis normal to the cutting plane, with the food object upon rotation of the circular blade around the second axis. A possible advantage is that it enables determining an angular position and a corresponding point in time, at which the remaining part of the food object can be moved, such as conveyed on a conveyor, towards and through a cutting plane defined by the circular blade can be started, such as the point in time at which the circular blade is no longer in the way for conveying of the remaining part of the food object. In other words, this enables starting moving, such as conveying, the remaining food object at the earliest time possible, which may in turn increase capacity of the cutting apparatus. The 'third angular position' is used interchangeably with 'an angular position at which the circular blade looses contact with the food object upon rotation of the circular blade around the second axis'.

Each of the first, second and third angular position refers to an angular position of the rotational movement of the circular blade around the second axis.

According to an embodiment, there is presented a cutting apparatus wherein the processor is further arranged for ensuring that an angular speed of the circular blade around the second axis does not exceed a first threshold value at the first angular position. This may enable avoiding that the angular speed is too high when the circular blade starts cutting the food object, which may be advantageous because too high angular speed at the first angular position risks that the cut interface is not clean and/or that one or more cut off sub-cuts are less aligned.

It may be understood, that the processor may control the angular speed (e.g., rad/second) of the circular blade around the second axis, and that this angular speed corresponds to a (Cartesian) speed (e.g., meter/second) of the circular blade at the point where it contacts the food object. Thus, 'angular speed of the circular blade around the second axis' may be used interchangeably with e.g. the 'speed of the circular blade at the point where it contacts the food object' where the latter is a speed at a specific angular position, here the first angular position.

According to an embodiment, there is presented a cutting apparatus wherein the processor is further arranged for ensuring that an angular speed of the circular blade around the second axis exceeds and/or increases above the first threshold value after having passed the first angular position, such as between the first angular position and the second angular position or the third angular position. This may be advantageous for ensuring that less time is spent with travelling an angular distance between starting of cutting a food object and starting a subsequent cutting of the same or another food object (such as ca. 360 degrees), which may in turn be advantageous for increasing a capacity of the cutting apparatus.

According to an embodiment, there is presented a cutting apparatus wherein the processor is further arranged for ensuring that an angular speed of the circular blade around the second axis increases, such as increases to a value between the first threshold value and a second threshold value, between the first angular position and the second angular position (such as after hitting the food object and during cutting).

According to an embodiment, there is presented a cutting apparatus wherein the processor is further arranged for ensuring that an angular speed of the circular blade around the second axis subsequent to exceeding the first threshold value after having passed the first angular position is reduced before reaching the second angular position. This may be advantageous for both ensuring that less time is spent with travelling an angular distance between starting of cutting a food object and starting a subsequent cutting of the same or another food object, such as between starting of cutting a food object and finishing cutting of the same food object, and for enabling avoiding that the angular speed is too high when the circular blade finishes cutting the food object (at the second angular position), which may be advantageous because too high angular speed at the second angular position risks that one or more cut off sub-cuts are less aligned.

According to an embodiment, there is presented a cutting apparatus wherein the processor is further arranged for ensuring that an angular speed of the circular blade around the second axis increases between the second angular position and the third angular position (such as after finishing cutting, but while the circular blade is still in contact with - and in the way of - the food object.).

According to an embodiment, there is presented a cutting apparatus wherein the processor is further arranged for ensuring that an angular speed of the circular blade and the second circular blade around the second axis increases and/or is reduced after having passed the third angular position (such as after the circular blade looses contact with - and is no longer in the way of - the food object and until a subsequent cut of the same or another food object is initiated).

According to an embodiment, there is presented a cutting apparatus wherein the processor is further arranged for ensuring that the angular speed of the circular blade around the second axis at or before the first angular position is substantially zero, such as within 0-3°/second, such as within 1-3°/second or such as zero (0°/second). This may be advantageous for making sure the circular blade is ready for cutting a food object. For example, if it takes time to convey a food object to a position of cutting, the circular blade can be kept in a position where there is little or no angular distance to the first angular position, so that when the food object is in place, cutting can be initiated in little or no time.

According to an embodiment, there is presented a cutting apparatus wherein the processor is further arranged for ensuring that the angular speed at the first angular position of the circular blade around the second axis is non-zero. This may be advantageous for minimizing time spent in moving the circular blade to a position where cutting of the food object is initiated and/or for reducing wear and energy consumption (by stopping/starting) of the cutting apparatus.

According to an embodiment, there is presented a cutting apparatus wherein the cutting apparatus is arranged so that a cut-off part of the food object fulfils a pre-defined criteria, such as thickness (such as wherein slices have a thickness within a range of less than or equal to 10 mm, such as less than or equal to 5 mm, such as less than or equal to 4 mm, such as less than or equal to 3 mm) or mass (such as wherein slices have a mass value within a range of less than or equal to 1000 gram, such as less than or equal to 500 gram, such as less than or equal to 200 gram, such as less than or equal to 100 gram, such as equal to or less than 50 gram, such as equal to or less than 10 gram). Any pre-defined criteria may be a value, such as a thickness value, such as 1 mm, 2 mm, 3 mm, 4 mm, 5 mm, 10 mm, 20 mm, or a mass value, such as 10 gram, 20 gram, 50 gram, 60 gram, 100 gram, 200 gram, 500 gram, 1 kg, optionally with a tolerance, such as an allowed deviation from said value in a negative and/or positive direction of within 1 %, 2 %, 5 %, 10 %, 20 % or 50 %.

According to an embodiment, there is presented a cutting apparatus wherein an angular speed at the first angular position, such as an angular speed profile between the first angular position and the second angular position, such as between the first angular position and the third angular position, is pre-defined depending on the nature, condition and/or type of food product. A possible advantage is that knowledge of the nature, condition and/or type of food product can lead directly to an appropriate or optimal angular speed. By 'nature' can be understood, e.g., fat and/or water content and/or presence of bones. By 'condition' can be understood, e.g., temperature and temperature distribution within the food object. By 'type' can be understood animal, such as poultry, cattle or pig, and/or cut, such as neck, loin, ham, chuck, etc.

According to an embodiment, there is presented a cutting apparatus wherein the measurement device comprises an imaging system for acquiring image data of the food object. This may be advantageous for enabling determining in a contact-free manner the position of at least a part of the surface of the food object to be cut, such as a height profile of the food object. The image data may be turned into said position or height profile by a separate processing unit or the processor.

According to an embodiment, there is presented a cutting apparatus wherein the circular blade is a first circular blade, which defines a cutting plane, and wherein the cutting apparatus is further comprising a second circular blade being rotatable around a third axis through a centre of the second circular blade, wherein the third axis is parallel and non-coaxial with respect to each of the first axis and the second axis, and wherein the second circular blade is substantially within, such as within, the cutting plane, wherein the second circular blade is rotatable around the second axis. The second circular blade may in general be arranged for operating in a manner similar to the first circular blade.

According to an embodiment, there is presented a cutting apparatus wherein the circular blade defines a cutting plane, and wherein the cutting apparatus is further comprising:
- A conveyor for conveying the food object from:
   - A first position wherein the food object does not intersect the cutting plane,
      to
   - A second position wherein the food object intersects the cutting plane, and wherein the food object will be cut, such as sliced or completely cut, upon rotation of the circular blade around the second axis.

By 'conveying' may be understood conveying along a path, which intersects a cutting plane as defined by the circular blade, such as a cutting area swept by the circular blade, such as wherein the path of the conveyor is substantially orthogonal to the cutting plane at the position of the cutting plane.

According to an embodiment, there is presented a cutting apparatus wherein the processor is further arranged for controlling a conveying speed of the conveyor based on the third angular value, such as the third angular value and the first angular value. A possible advantage is that it enables controlling an improved or optimal controlling of the conveyor, e.g., that the conveyor is not conveying - or conveying only at very low speed - before the third angular value is reached (where the food object is in the way), and wherein a conveyor speed is increased after the third angular value is reached (and the food object is no longer in the way)

The circular blades used in the system may be any circular blades used for cutting food objects, such as circular blades or knives with or without teeth or indentations. Type of teeth if any may be selected in respect of the food objects to be cut. Preferred types of circular blades for slicing meat may be finely serrated blades or toothless circular knives.

According to a second aspect, there is presented use of the apparatus according to claim 13.

According to a third aspect, there is presented a method according to claim 14.

It is understood, that cutting of the food object takes place by rotating the cutting blade, such as said rotating of the cutting blade around the second axis is understood to be moving of the cutting blade through the food object and hence cutting the food object while at the same time the circular blade in contact with the food object is rotating around the axis of the circular blade itself, such as the first axis..

According to an embodiment there is presented a method wherein the food object is fresh, such as non-frozen and/or non-undercooled and/or non-crust-frozen, and/or a temperature of the food object is above 0° Celsius. A possible advantage of this is that it allows keeping the food object fresh, which may avoid a reduction in shelf life of the food object. Furthermore, it may enable dispensing with equipment and processes necessary for cooling of the food object.

The first, second, and third aspect of the present invention may each be combined with any of the other aspects. These and other aspects of the invention will be apparent from and elucidated with reference to the embodiments described hereinafter.

### BRIEF DESCRIPTION OF THE FIGURES

The cutting apparatus, use and method for cutting a food object according to the invention will now be described in more detail with regard to the accompanying figures. The figures show one way of implementing the present invention and is not to be construed as being limiting to other possible embodiments falling within the scope of the attached claim set.
FIG. 1 shows a cutting apparatus with an imaging system and a conveyor.
FIG. 2 shows a schematic of angular movement of the circular blade around the second axis.
FIGs. 3-6 show schematics of angular movement of the circular blade around the 2^{nd} axis.
FIG. 7 shows a schematic of angular speed of the circular blade around the second axis and conveyor speed as a function of angular value of the circular blade around the second axis.
FIG. 8 shows a cutting system with two circular blades.
FIG. 9 shows graphs of angular movement of circular blade around the second axis and the conveyor belt speed.

### DETAILED DESCRIPTION OF AN EMBODIMENT

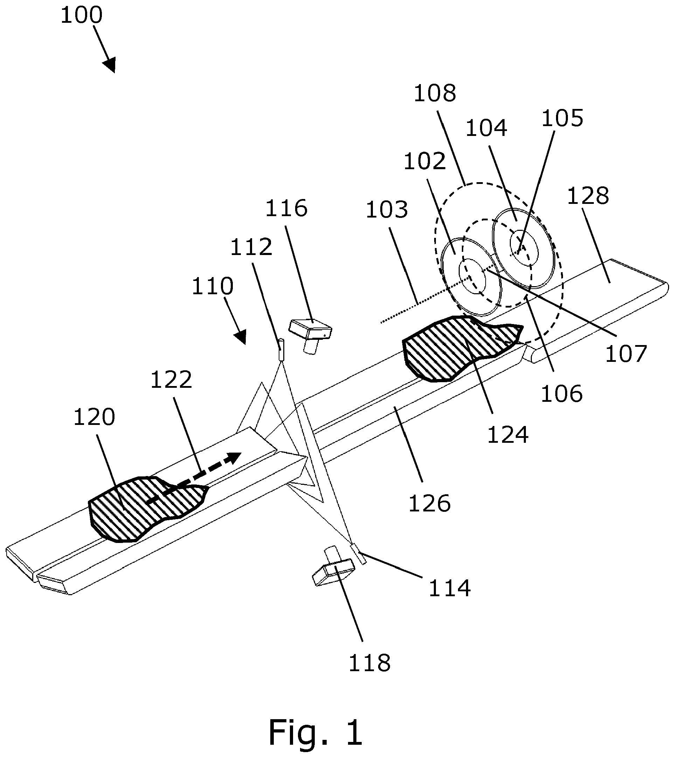

FIG. 1 shows a cutting apparatus 100 with an imaging system 116, 118 and a conveyor 126, and more particularly a cutting apparatus 100 for cutting a food object 120, 124, said apparatus comprising a circular blade 102 being rotatable around a first axis 103 through a centre of the circular blade, and wherein the circular blade 102 and in particular the first axis 103, is rotatable around a second axis 107, wherein the second axis is parallel and non-coaxial with respect to the first axis. The rotation of the first axis 103 around second axis 107 thus defines a circle 106 and the area swept by the circular blade 102 has a circular outer limit 108. The circular blade 102 in the present embodiment is a first circular blade, which defines a cutting plane, and wherein the cutting apparatus is further comprising a second circular blade 104 being rotatable around a third axis 105 through a centre of the second circular blade, wherein the third axis is parallel and non-coaxial with respect to each of the first axis 103 and the second axis 107, wherein the second circular blade 104 is substantially within, such as within, the cutting plane, and wherein the second circular blade (104) is rotatable around the second axis. Both of the first circular blade 102 and the second circular blade 104 is arranged on a common member and arranged for making a planetary movement around a common axis 107. The apparatus is further comprising a measurement device 110 for determining a position of at least a part of the surface of the food object 120, 124 to be cut and more particularly a height profile of the food object. The measurement device 110 is a height profiler comprising line lasers 112, 114 and an imaging system with cameras 116, 118 for acquiring image data of lines of the line lasers and thereby of the food object 120, 124 (in the present embodiment there is a plurality of each of cameras and line lasers, more particularly three of each where only two are visible in the figure). The apparatus also comprises a processor (not shown) arranged for controlling an angular speed (ω) of the circular blade 102 around the second axis 107 based on the position of at least a part of the surface of the food object to be cut, such as the height profile. The cutting apparatus is further comprising a conveyor 126 for conveying the food object from a first position wherein the food object 120 (where food object 120 is shown in the first position and moving in a conveying direction as indicated by arrow 122) does not intersect the cutting plane to a second position wherein the food object 124 (where food object 124 is shown in the second position and kept still or moved at a low speed (such as a speed of movement being 0-2 mm/second, such as 0-1 mm/second) for cutting by the first circular blade 102) intersects the cutting plane, and wherein the food object will be cut upon rotation (in a counter-clockwise direction as observed from the first position) of the circular blade 102 around the second axis 107. The cutting apparatus furthermore comprises a second conveyor 128 for conveying one or more sub-cuts (piece(s) cut of the food object) away from the cutting plane.

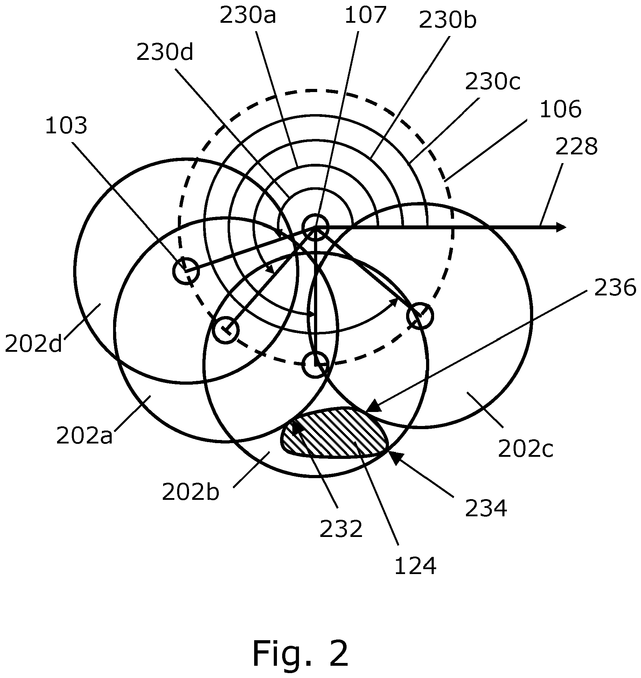

FIG. 2 shows a schematic of angular movement of the circular blade 202a-d around the second axis 107. The schematic shows the circular blade 202a-d in four different angular positions during angular movement counter-clockwise around the second axis 107 as observed from a position away the cutting plane (such as a position corresponding to the first position of the food object 120 in figure 1). Each angular position is shown as measured with respect to horizontal axis 228. The four positions include:
a) The circular blade 202a at the first angular position 230a where the circular blade 202a makes contact at point 232 with the food object 124 and initiates cutting.
b) The circular blade 202b at the second angular position 230b where the circular blade 202b cuts the last connection at point 234 between part of the food 124 which are separated by the cutting and hence angular position 230b is the angular position at which cutting is finished (but where circular blade 202b is still in the way of the remaining part of the food object 124, such as there is still an overlap between remaining part of food object 124 and circular blade 202b as seen in this view).
c) The circular blade 202c at the third angular position 230c where the circular blade looses contact at point 236 with the food object 124 (i.e., where circular blade 202c is no longer in the way of the remaining part of the food object 124, such as there is no longer an overlap between remaining part of food object 124 and circular blade 202c as seen in this view).
d) The circular blade 202d at the fourth angular position 230d where the circular blade 202d is yet to make contact with the food object 124 and initiate cutting. This angular position may be the position, at which:
   a. The circular blade 202d is "parked" if the food object is not yet in place for (next) cutting,
   b. Deceleration of an angular rotation of the circular blade 202d around the second axis 107 is initiated, so that an angular speed does not exceed a first threshold value at the first angular position 230a, and/or
   c. Deceleration of a speed of the conveyor 126 is initiated so that a conveyor speed is zero or below a conveyor threshold value during cutting.

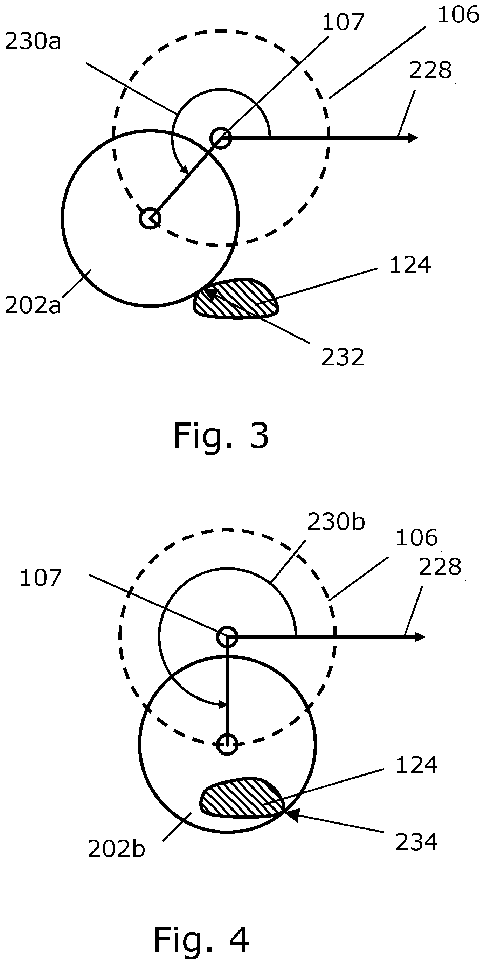

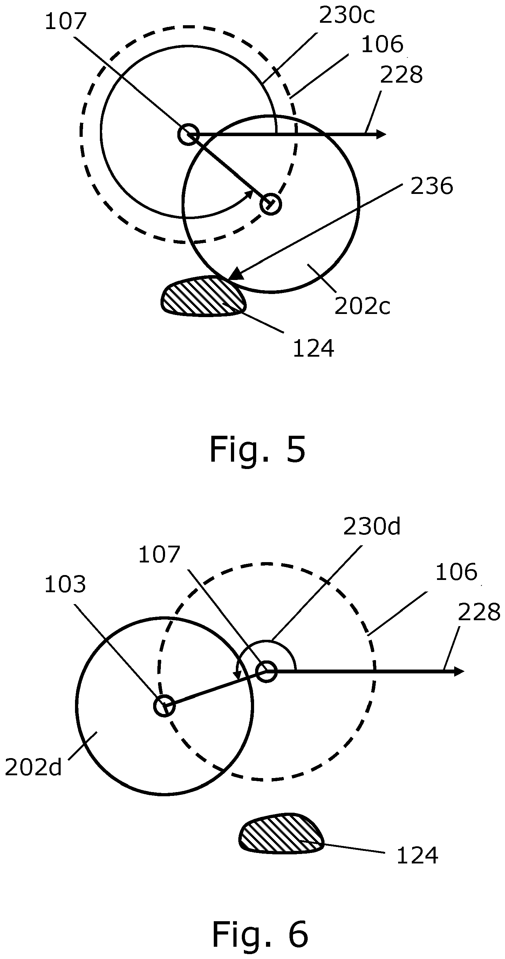

FIGs. 3-6 show schematics of angular movement of the circular blade 202a-d around the second axis 107. More particularly, figures 3-6 correspond to figure 2, except that in each of figures 3-6, elements of figure 2 have been removed to more clearly illustrate, respectively, the first, second, third and fourth angular position.

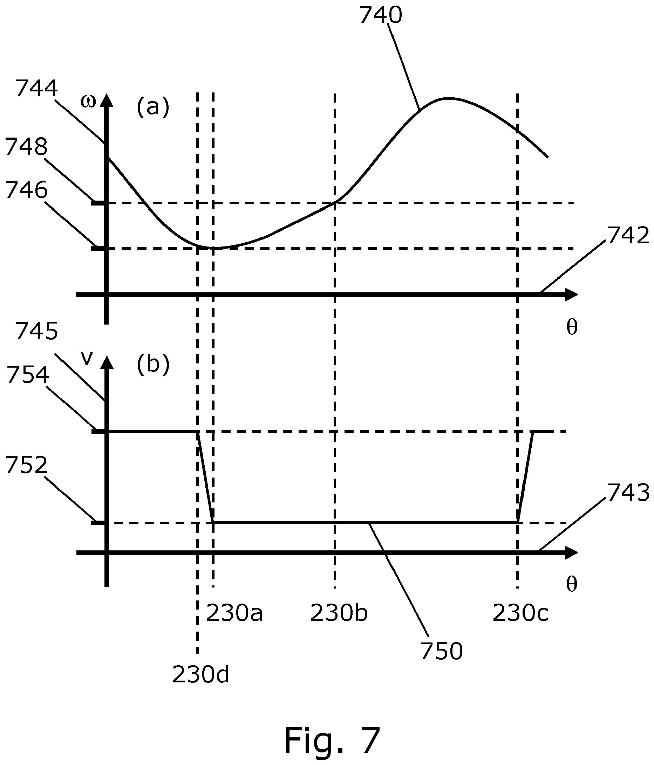

FIG. 7 shows a schematic of angular speed (ω) of the circular blade around the second axis and conveyor speed (v) as a function of angular value (θ) of the circular blade around the second axis.

In more detail, the figure shows an upper graph (a) with angular value (θ) on the first axis 742 and angular speed (ω) on the second axis 744. The graph furthermore an angular speed curve 740 depicted as a function of angular value. The curve shows that an angular speed of the circular blade around the second axis 107 does not exceed a first threshold value 746 at the first angular position 230a (where the angular speed is exactly the first threshold value 746). The first threshold value could be at least 100°/second, such as at least 200°/second and/or at most 400°/second, such as at most 300°/Second, such as within 100-400°/second, such as within 200-300°/second, such as 250°/second. The curve furthermore shows that an angular speed of the circular blade around the second axis 107 increases to a value above the first threshold value 746 after having passed the first angular position 230a. The curve is monotonically increasing until the second angular value 230b, but in an alternative embodiment an angular speed of the circular blade around the second axis subsequent to exceeding the first threshold value after having passed the first angular position is reduced before reaching the second angular position. The curve furthermore shows that an angular speed of the circular blade around the second axis 107 increases to a value above a second threshold value 748 after having passed the second angular position 230b. The second threshold value could be at least 500°/second, such as at least 650°/second and/or at most 1000°/second, such as at most 850°/second, such as within 500-1000°/second, such as within 650-850°/second, such as 750°/second. The curve furthermore shows that an angular speed of the circular blade around the second axis 107 decreases (in the present embodiment starts decreasing between the second angular position 230b and the third angular position 230c) so the angular speed of the circular blade around the second axis 107 also does not exceed the first threshold value 746 next time a first angular position is reached, such as when a subsequent cut is initiated (note that the next 'first angular position' may have a different angular value, because a height profile of the food object may change from cut to cut). In an alternative embodiment where the food object has not reached the cut position, e.g. because of a low conveyor speed or large portion, the angular speed would after third angular position 230c be reduced to substantially zero, such as zero, and reach the park position (fourth angular position 230d), a position whose quantitative angular value is given by the height profile of the next cut and arranged so that the first threshold value 746 can be reached in the (next) first angular position 230a. It is noted that the fourth angular position in figure 7 is shown to both be coincident with a "park position" of the circular blade and the position where the conveyor starts decelerating, and this may or may not be the case in embodiments, i.e., the park position can be different from or coincident with a position where a change of the conveyor speed and/or acceleration takes place.

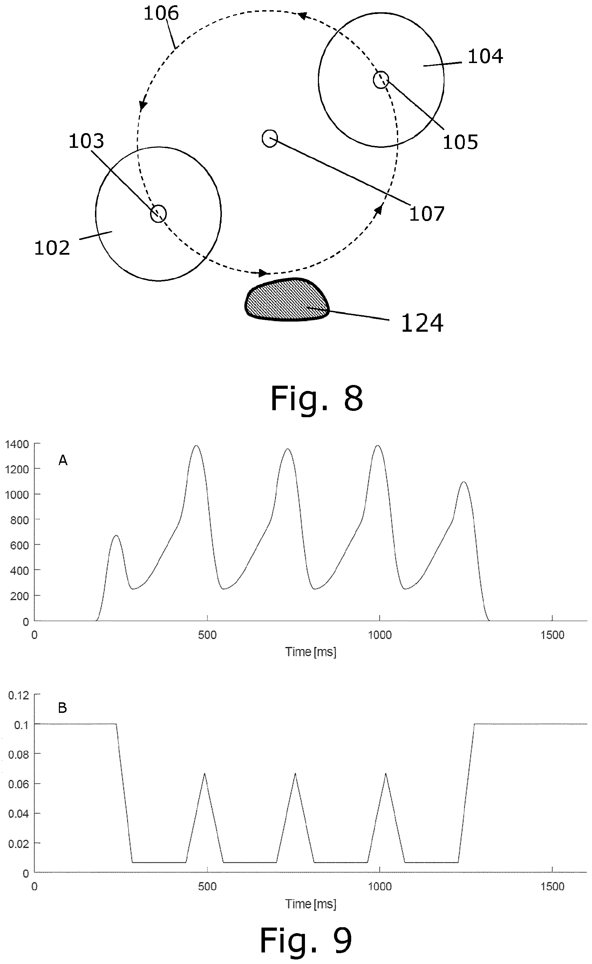

Fig. 8 shows a cutting apparatus 100 with two circular blades 102, 104, though e.g. three or four circular blades may also be positioned around the second axis 107. The circular blades are positioned in the same plane and thus being capable of cutting in the same plane e.g. in between a space between two conveyor belts. One of the at least one circular blade is a first circular blade 102, and is rotatable around a first axis 103 extending through a centre of the first circular blade 102, and a second circular blade 104 is rotatable around a third axis 105 extending through a centre of the second circular blade 104, both of the first circular blade 102 and the second circular blade 104 are rotatable around a third axis 107, wherein the third axis is parallel and non-coaxial with respect to each of the first axis 103 and the second axis 105. In the embodiment the first circular blade 102 defines a cutting plane and the second circular blade 104 is within this cutting plane. Illustrated is also a food object 124, which during rotation of the first circular blade 102 and second circular blade 104 around the second axis 107 will be cut first by the first cutting blade 102 and afterwards (when a conveyor (not shown) has moved the food object further in the transport direction) by the second cutting blade 104. Each of the first circular blade 102 and second circular blade 104 may be running continuously and at a constant speed, and the angular speed i.e. the speed of the first circular blade 102 and the second circular blade 104 around the second axis 107 may be as described elsewhere herein. When the first circular blade 102 cuts in a food object 124 the second circular blade 104 is not cutting, but is on it's way around the second axis 107 to get in position to cut again. The circular blades, e.g. 2, 3, 4 or 5 circular blades preferably have same distance from the centre of the circular blade to the second axis 107.

Fig. 9 illustrate possible data for the system when cutting a food object. In graph "A" the knife velocity measured as deg/s is illustrated as a function of time measured in ms. The knife velocity is the velocity of a knife (e.g. 102) rotating around the second axis 107. The high velocity of the knife is used for bringing the knife in position between cutting food object. In the graph "B" the corresponding belt velocity measured in m/s is illustrated as a function of time measured in ms. A low belt velocity correspond to a period where a food object is being cut. Illustrated by the graphs are how the angular knife velocity is adjusted in respect of the cutting process and the presence of a food object in the cutting plane. The knife velocity is high when there is no food object in the cutting plane.

In more detail, the figure shows a lower graph (b) with angular value (θ) on the first axis 743 and speed (v) of the conveyor 126 on the second axis 745. The graph furthermore a speed curve 750 depicted as a function of angular value. The curve shows that a speed of the conveyor does not exceed a first conveyor speed value 752 when the circular blade is at the first angular position 230a (where the conveyor speed is exactly the first conveyor speed value 752). The curve furthermore shows that a speed of the conveyor increases to a value above the first conveyor speed value 752, in fact increases to a second conveyor speed value 754 after the circular blade has passed the third angular position 230c. The curve furthermore shows that a conveyor speed decreases (in the present embodiment starts decreasing at the fourth angular position 230d) so the speed of the conveyor reaches the first conveyor speed value when the circular blade is at the first angular value. In an embodiment the first conveyor speed value 752 is determined by the allowable movement (in distance) of the conveyor when the knife is between the first angular position 230a and the third angular position 230c. Thus, the conveyor speed is determined by the size of the product and rotational speed of the circular blade around the second axis.

Although the present invention has been described in connection with the specified embodiments, it should not be construed as being in any way limited to the presented examples. The scope of the present invention is set out by the accompanying claim set.

## Claims

1. A cutting apparatus (100) for cutting, such as slicing, a food object (120, 124),
said apparatus is comprising:
- At least one circular blade (102) being rotatable around a first axis (103) through a centre of the circular blade, and wherein the at least one circular blade (102) is rotatable around a second axis (107), wherein the second axis is parallel and non-coaxial with respect to the first axis,
said apparatus further comprising:
- A measurement device (110) for determining a position of at least a part of the surface of the food object (120, 124) to be cut, such as a height profiler arranged for determining a height profile of the food object, and
- A processor arranged for controlling an angular speed of the at least one circular blade (102) around the second axis (107) based on the position of at least a part of the surface of the food object to be cut, such as the height profile.

2. The cutting apparatus (100) according to claim 1, wherein the processor is arranged for:
- Determining based on the position of at least a part of the surface of the food object (120, 124) to be cut, such as the height profile, a first angular position (230a) at which one of the at least one circular blade makes contact with the food object upon rotation of the at least one circular blade around the second axis (107).

3. The cutting apparatus (100) according to any one of the preceding claims, wherein the processor is arranged for:
- Determining based on the position of at least a part of the surface of the food object (120, 124) to be cut, such as the height profile, a second angular position (230b) at which one of the at least one circular blade finishes cutting the food object upon rotation of the at least one circular blade around the second axis (107).

4. The cutting apparatus (100) according to any one of the preceding claims, wherein the processor is arranged for:
- Determining based on the position of at least a part of the surface of the food object (120, 124) to be cut, such as the height profile, a third angular position (230c) at which one of the at least one circular blade looses contact with the food object upon rotation of the at least one circular blade around the second axis (107).

5. The cutting apparatus (100) according to claim 2, wherein the processor is further arranged for:
- Ensuring that an angular speed of the at least one circular blade around the second axis (107) does not exceed a first threshold value (746) at the first angular position (230a).

6. The cutting apparatus (100) according to any one of claims 2 and 5, wherein the processor is further arranged for:
- Ensuring that an angular speed of the at least one circular blade around the second axis (107) exceeds and/or increases above the first threshold value (746) after having passed the first angular position (230a).

7. The cutting apparatus (100) according to any one of the preceding claims, wherein the cutting apparatus is arranged so that a cut-off part of the food object fulfils a pre-defined criteria, such as thickness, such as wherein slices have a thickness of less than or equal to 10 mm, such as less than or equal to 5 mm, such as less than or equal to 4 mm, such as less than or equal to 3 mm, or mass, such as wherein slices have a mass of less than or equal to 1000 gram, such as less than or equal to 500 gram, such as less than or equal to 200 gram, such as less than or equal to 100 gram, such as equal to or less than 50 gram, such as equal to or less than 10 gram.

8. The cutting apparatus (100) according to any one of the preceding claims, wherein an angular speed at the first angular position (230a), such as an angular speed profile (740) between the first angular position (230a) and the second angular position (230b), such as between the first angular position (230a) and the third angular position (230c), is pre-defined depending on the nature, condition and/or type of food product (120, 124).

9. The cutting apparatus (100) according to any one of the preceding claims, wherein the measurement device (110) comprises:
- An imaging system (116, 118) for acquiring image data of the food object (120, 124).

10. The cutting apparatus (100) according to any one of the preceding claims, wherein one of the at least one circular blade is a first circular blade (102), which defines a cutting plane, and wherein the cutting apparatus is further comprising:
- A second circular blade (104) being rotatable around a third axis (105) through a centre of the second circular blade, wherein the third axis is parallel and non-coaxial with respect to each of the first axis (103) and the second axis (107) and
wherein the second circular blade (104) is substantially within, such as within, the cutting plane,
wherein the second circular blade (104) is rotatable around the second axis.

11. The cutting apparatus (100) according to any one of the preceding claims, wherein the at least one circular blade (102) defines a cutting plane, and wherein the cutting apparatus is further comprising:
- A conveyor (126) for conveying the food object (120, 124) from:
- A first position wherein the food object does not intersect the cutting plane,
to
- A second position wherein the food object intersects the cutting plane, and wherein the food object will be cut upon rotation of one of the at least one circular blade (102) around the second axis (107).

12. The cutting apparatus (100) according to claim 4 and claim 11, wherein the processor is further arranged for controlling a conveying speed of the conveyor (126) based on the third angular value (230c), such as the third angular value (230c) and the first angular value (230a).

13. Use of the apparatus (100) according to any one of the preceding claims for cutting, such as slicing, a food object (120, 124), such as a fish object or a meat object.

14. A method for cutting a food object (120, 124), comprising:
- Rotating at least one circular blade (102) around a first axis (103) through a centre of the circular blade (102),
- Rotating the at least one circular blade around a second axis (107), wherein the second axis (107) is parallel and non-coaxial with respect to the first axis (103),
- Determining a position of at least a part of the surface of the food object to be cut, such as a height profile of the food object, and
controlling an angular speed of the rotation of the at least one circular blade (102) around the second axis (107) based on the position of at least a part of the surface of the food object to be cut, such as the height profile.

15. A method according to claim 14, wherein the food object (120, 124) is fresh or frozen, such as non-frozen and/or non-undercooled and/or non-crust-frozen, and/or a temperature of the food object is above 0° Celsius or frozen and/or undercooled and/or a temperature of the food object is below 0° Celsius.

## Patentansprüche

1. Schneidvorrichtung (100) zum Schneiden, wie beispielsweise In-Scheiben-Schneiden, eines Nahrungsmittelgegenstandes (120, 124), wobei die Vorrichtung Folgendes umfasst:
- mindestens eine kreisförmige Klinge (102), die um eine erste Achse (103) durch eine Mitte der kreisförmigen Klinge drehbar ist, und wobei die mindestens eine kreisförmige Klinge (102) um eine zweite Achse (107) drehbar ist, wobei die zweite Achse parallel und nicht-koaxial in Bezug auf die erste Achse ist,
wobei die Vorrichtung ferner Folgendes umfasst:
- eine Messeinrichtung (110) zum Bestimmen einer Position zumindest eines Teils der Oberfläche des Nahrungsmittelgegenstandes (120, 124), der geschnitten werden soll, wie beispielsweise ein Höhenprofilmessgerät, das zum Bestimmen eines Höhenprofils des Nahrungsmittelgegenstandes angeordnet ist, und
- einen Prozessor, der angeordnet ist zum Regeln einer Winkelgeschwindigkeit der mindestens einen kreisförmigen Klinge (102) um die zweite Achse (107) auf Grundlage der Position zumindest eines Teils der Oberfläche des Nahrungsmittelgegenstandes, der geschnitten werden soll, wie beispielsweise des Höhenprofils.

2. Schneidvorrichtung (100) nach Anspruch 1, wobei der Prozessor für Folgendes angeordnet ist:
- Bestimmen, auf Grundlage der Position zumindest eines Teils der Oberfläche des Nahrungsmittelgegenstandes (120, 124), der geschnitten werden soll, wie beispielsweise des Höhenprofils, einer ersten Winkelposition (230a), bei der eine von der mindestens einen kreisförmigen Klinge auf eine Drehung der mindestens einen kreisförmigen Klinge um die zweite Achse (107) hin eine Berührung mit dem Nahrungsmittelgegenstand herstellt.

3. Schneidvorrichtung (100) nach einem der vorhergehenden Ansprüche, wobei der Prozessor für Folgendes angeordnet ist:
- Bestimmen, auf Grundlage der Position zumindest eines Teils der Oberfläche des Nahrungsmittelgegenstandes (120, 124), der geschnitten werden soll, wie beispielsweise des Höhenprofils, einer zweiten Winkelposition (230b), bei der eine von der mindestens einen kreisförmigen Klinge auf eine Drehung der mindestens einen kreisförmigen Klinge um die zweite Achse (107) hin das Schneiden des Nahrungsmittelgegenstandes beendet.

4. Schneidvorrichtung (100) nach einem der vorhergehenden Ansprüche, wobei der Prozessor für Folgendes angeordnet ist:
- Bestimmen, auf Grundlage der Position zumindest eines Teils der Oberfläche des Nahrungsmittelgegenstandes (120, 124), der geschnitten werden soll, wie beispielsweise des Höhenprofils, einer dritten Winkelposition (230c), bei der eine von der mindestens einen kreisförmigen Klinge auf eine Drehung der mindestens einen kreisförmigen Klinge um die zweite Achse (107) hin die Berührung mit dem Nahrungsmittelgegenstand verliert.

5. Schneidvorrichtung (100) nach Anspruch 2, wobei der Prozessor ferner für Folgendes angeordnet ist:
- Sicherstellen, dass eine Winkelgeschwindigkeit der mindestens einen kreisförmigen Klinge um die zweite Achse (107) bei der ersten Winkelposition (230a) nicht einen ersten Schwellenwert (746) überschreitet.

6. Schneidvorrichtung (100) nach einem der Ansprüche 2 und 5, wobei der Prozessor ferner für Folgendes angeordnet ist:
- Sicherstellen, dass eine Winkelgeschwindigkeit der mindestens einen kreisförmigen Klinge um die zweite Achse (107), nachdem sie die erste Winkelposition (230a) passiert hat, den ersten Schwellenwert (746) überschreitet und/oder über denselben ansteigt.

7. Schneidvorrichtung (100) nach einem der vorhergehenden Ansprüche, wobei die Schneidvorrichtung so angeordnet ist, dass ein abgeschnittener Teil des Nahrungsmittelgegenstandes ein vordefiniertes Kriterium erfüllt, wie beispielsweise eine Dicke, wie beispielsweise, wobei Scheiben eine Dicke von weniger als oder gleich 10 mm, wie beispielsweise weniger als oder gleich 5 mm, wie beispielsweise weniger als oder gleich 4 mm, wie beispielsweise weniger als oder gleich 3 mm, aufweisen, oder eine Masse, wie beispielsweise, wobei Scheiben eine Masse von weniger als oder gleich 1000 Gramm, wie beispielsweise weniger als oder gleich 500 Gramm, wie beispielsweise weniger als oder gleich 200 Gramm, wie beispielsweise weniger als oder gleich 100 Gramm, wie beispielsweise gleich oder weniger als 50 Gramm, wie beispielsweise gleich oder weniger als 10 Gramm, aufweisen.

8. Schneidvorrichtung (100) nach einem der vorhergehenden Ansprüche, wobei eine Winkelgeschwindigkeit bei der ersten Winkelposition (230a), wie beispielsweise ein Winkelgeschwindigkeitsprofil (740) zwischen der ersten Winkelposition (230a) und der zweiten Winkelposition (230b), wie beispielsweise zwischen der ersten Winkelposition (230a) und der dritten Winkelposition (230c), in Abhängigkeit von der Beschaffenheit, dem Zustand und/oder der Art von Nahrungsmittelerzeugnis (120, 124) vordefiniert ist.

9. Schneidvorrichtung (100) nach einem der vorhergehenden Ansprüche, wobei die Messeinrichtung (110) Folgendes umfasst:
- ein Bilderfassungssystem (116, 118) zum Erfassen von Bilddaten des Nahrungsmittelgegenstandes (120, 124).

10. Schneidvorrichtung (100) nach einem der vorhergehenden Ansprüche, wobei eine von der mindestens einen kreisförmigen Klinge eine erste kreisförmige Klinge (102) ist, die eine Schneidebene definiert, und wobei die Schneidvorrichtung ferner Folgendes umfasst:
- eine zweite kreisförmige Klinge (104), die um eine dritte Achse (105) durch eine Mitte der zweiten kreisförmigen Klinge drehbar ist, wobei die dritte Achse parallel und nicht-koaxial in Bezug auf die erste Achse (103) und die zweite Achse (107) ist, und
wobei sich die zweite kreisförmige Klinge (104) im Wesentlichen innerhalb, wie beispielsweise innerhalb, der Schneidebene befindet,
wobei die zweite kreisförmige Klinge (104) um die zweite Achse drehbar ist.

11. Schneidvorrichtung (100) nach einem der vorhergehenden Ansprüche, wobei die mindestens eine kreisförmige Klinge (102) eine Schneidebene definiert und wobei die Schneidvorrichtung ferner Folgendes umfasst:
- einen Förderer (126) zum Befördern des Nahrungsmittelgegenstandes (120, 124) von:
- einer ersten Position, in welcher der Nahrungsmittelgegenstand die Schneidebene nicht überschneidet,
zu
- einer zweiten Position, in welcher der Nahrungsmittelgegenstand die Schneidebene überschneidet und in welcher der Nahrungsmittelgegenstand auf eine Drehung der mindestens einen kreisförmigen Klinge (102) um die zweite Achse (107) hin geschnitten werden wird.

12. Schneidvorrichtung (100) nach Anspruch 4 und Anspruch 11, wobei der Prozessor ferner zum Regeln einer Fördergeschwindigkeit des Förderers (126) auf Grundlage des dritten Winkelwertes (230c), wie beispielsweise des dritten Winkelwertes (230c) und des ersten Winkelwertes (230a), angeordnet ist.

13. Verwendung der Vorrichtung (100) nach einem der vorhergehenden Ansprüche zum Schneiden, wie beispielsweise In-Scheiben-Schneiden, eines Nahrungsmittelgegenstandes (120, 124), wie beispielsweise eines Fischgegenstandes oder eines Fleischgegenstandes.

14. Verfahren zum Schneiden eines Nahrungsmittelgegenstandes (120, 124), das Folgendes umfasst:
- Drehen mindestens einer kreisförmigen Klinge (102) um eine erste Achse (103) durch eine Mitte der kreisförmigen Klinge (102),
- Drehen der mindestens einen kreisförmigen Klinge um eine zweite Achse (107), wobei die zweite Achse (107) parallel und nicht-koaxial in Bezug auf die erste Achse (103) ist,
- Bestimmen einer Position zumindest eines Teils der Oberfläche des Nahrungsmittelgegenstandes, der geschnitten werden soll, wie beispielsweise eines Höhenprofils des Nahrungsmittelgegenstandes, und
- Regeln einer Winkelgeschwindigkeit der Drehung der mindestens einen kreisförmigen Klinge (102) um die zweite Achse (107) auf Grundlage der Position zumindest eines Teils der Oberfläche des Nahrungsmittelgegenstandes, der geschnitten werden soll, wie beispielsweise des Höhenprofils.

15. Verfahren nach Anspruch 14, wobei der Nahrungsmittelgegenstand (120, 124) frisch oder gefroren, wie beispielsweise nicht gefroren und/oder nicht unterkühlt und/oder nicht krustengefroren, ist und/oder eine Temperatur des Nahrungsmittelgegenstandes oberhalb von 0° Celsius oder gefroren und/oder unterkühlt ist und/oder eine Temperatur des Nahrungsmittelgegenstandes unterhalb von 0° Celsius ist.

## Revendications

1. Appareil de coupe (100), pour la coupe, comme le tranchage, d'un objet alimentaire (120, 124), ledit appareil comprenant :
- au moins une lame circulaire (102) pouvant tourner autour d'un premier axe (103) à travers un centre de la lame circulaire, et l'au moins une lame circulaire (102) pouvant tourner autour d'un deuxième axe (107), le deuxième axe est en parallèle et non coaxial par rapport au premier axe,
ledit appareil comprenant en outre :
- un dispositif de mesure (110) pour déterminer une position d'au moins une partie de la surface de l'objet alimentaire (120, 124) à couper, comme un profilé de hauteur conçu pour déterminer un profil de hauteur de l'objet alimentaire, et
- un processeur conçu pour contrôler une vitesse angulaire de l'au moins une lame circulaire (102) autour du deuxième axe (107) en se basant sur la position d'au moins une partie de la surface de l'objet alimentaire à couper, comme le profilé de hauteur.

2. Appareil de coupe (100) selon la revendication 1, dans lequel le processeur est conçu pour :
- déterminer, en se basant sur la position d'au moins une partie de la surface de l'objet alimentaire (120, 124) à couper, comme le profilé de hauteur, une première position angulaire (230a) à laquelle l'au moins une lame circulaire établit un contact avec l'objet alimentaire à la rotation de l'au moins une lame circulaire autour du deuxième axe (107).

3. Appareil de coupe (100) selon l'une quelconque des revendications précédentes, dans lequel le processeur est conçu pour :
- déterminer, en se basant sur la position d'au moins une partie de la surface de l'objet alimentaire (120, 124) à couper, comme le profilé de hauteur, une deuxième position angulaire (230b) à laquelle l'une de l'au moins une lame circulaire finit de couper l'objet alimentaire à la rotation de l'au moins une lame circulaire autour du deuxième axe (107).

4. Appareil de coupe (100) selon l'une quelconque des revendications précédentes, dans lequel le processeur est conçu pour :
- déterminer, en se basant sur la position d'au moins une partie de la surface de l'objet alimentaire (120, 124) à couper, comme le profilé de hauteur, une troisième position angulaire (230c) à laquelle l'une de l'au moins une lame circulaire perd le contact avec l'objet alimentaire à la rotation de l'au moins une lame circulaire autour du deuxième axe (107).

5. Appareil de coupe (100) selon la revendication 2, dans lequel le processeur est conçu pour :
- s'assurer que la vitesse angulaire de l'au moins une lame circulaire autour du deuxième axe (107) n'excède pas une première valeur seuil (746) à la première position angulaire (230a).

6. Appareil de coupe (100) selon l'une quelconque des revendications 2 et 5, dans lequel le processeur est en outre conçu pour :
- s'assurer qu'une vitesse angulaire de l'au moins une lame circulaire autour du deuxième axe (107) excède et/ou augmente au-dessus de la première valeur seuil (746) après avoir dépassé la première position angulaire (230a).

7. Appareil de coupe (100) selon l'une quelconque des revendications précédentes, dans lequel l'appareil de coupe est conçu pour qu'une partie découpée de l'objet alimentaire remplisse un critère prédéfini, comme une épaisseur telle que des tranches aient une épaisseur inférieure ou égale à 10 mm, inférieure ou égale à 5 mm, inférieure ou égale à 4 mm, inférieure ou égale à 3 mm, ou une masse telle que des tranches aient une masse inférieure ou égale à 1000 grammes, inférieure ou égale à 500 grammes, inférieure ou égale à 200 grammes, inférieure ou égale à 100 grammes, inférieure ou égale à 50 grammes, inférieure ou égale à 10 grammes.

8. Appareil de coupe (100) selon l'une quelconque des revendications précédentes, dans lequel une vitesse angulaire à la première position angulaire (230a) telle qu'un profil de vitesse angulaire (740) entre la première position angulaire (230a) et la deuxième position angulaire (230b) telle qu'entre la première position angulaire (230a) et la troisième position angulaire (230c) soit prédéfini en fonction de la nature, de l'état et/ou du type de produit alimentaire (120, 124).

9. Appareil de coupe (100) selon l'une quelconque des revendications précédentes, dans lequel le dispositif de mesure (110) comprend :
- un système d'imagerie (116, 118) pour acquérir des données d'image de l'objet alimentaire (120, 124).

10. Appareil de coupe (100) selon l'une quelconque des revendications précédentes, dans lequel l'une de l'au moins une lame circulaire est une première lame circulaire (102) qui définit un plan de coupe, et l'appareil de coupe comprend en outre :
- une seconde lame circulaire (104) qui peut tourner autour d'un troisième axe (105) à travers un centre de la seconde lame circulaire, le troisième axe étant parallèle et non coaxial à chacun parmi le premier axe (103) et le deuxième axe (107) et
la seconde lame circulaire (104) se trouve substantiellement dans, comme dans, le plan de coupe,
la seconde lame circulaire (104) pouvant tourner autour du deuxième axe.

11. Appareil de coupe (100) selon l'une quelconque des revendications précédentes, dans lequel l'au moins une lame circulaire (102) définit un plan de coupe, et l'appareil de coupe comprend en outre :
- un convoyeur (126) pour convoyer l'objet alimentaire (120, 124) depuis :
- une première position où l'objet alimentaire ne coupe pas le plan de coupe,
jusqu'à
- une seconde position où l'objet alimentaire coupe le plan de coupe, et/ou l'objet alimentaire sera coupé sur rotation de l'une de l'au moins une lame circulaire (102) autour du deuxième axe (107).

12. Appareil de coupe (100) selon la revendication 4 et la revendication 11, dans lequel le processeur est en outre conçu pour contrôler une vitesse de convoyage du convoyeur (126) en se basant sur la troisième valeur angulaire (230c), la troisième valeur angulaire (230c) et la première valeur angulaire (230a).

13. Utilisation de l'appareil (100) selon l'une quelconque des revendications précédentes pour couper, comme trancher, un produit alimentaire (120, 124), tel qu'un premier objet en poisson ou un objet en viande.

14. Procédé de coupe d'un objet alimentaire (120, 124) comprenant :
- la rotation d'au moins une lame circulaire (102) autour d'un premier axe (103) à travers un centre de la lame circulaire (102),
- la rotation de l'au moins une lame circulaire autour d'un deuxième axe (107), le deuxième axe (107) étant parallèle et non coaxial au premier axe (103),
- la détermination d'une position d'au moins une partie de la surface de l'objet alimentaire à couper, comme un profilé de hauteur de l'objet alimentaire, et
- le contrôle d'une vitesse angulaire de la rotation de l'au moins une lame circulaire (102) autour du deuxième axe (107) en se basant sur la position d'au moins une partie de la surface de l'objet alimentaire à couper, comme le profilé de hauteur.

15. Procédé selon la revendication 14, dans lequel l'objet alimentaire (120, 124) est frais ou surgelé, tel que non surgelé et/ou non congelé et/ou non congelé et/ou non glacé, et/ou une température de l'objet alimentaire est au-dessus de 0 °Celsius et/ou surgelé/ou congelé et/ou une température de l'objet alimentaire est en-dessous de 0 °Celsius.
